# EUROPEAN PATENT SPECIFICATION

(11) **EP 4 116 660 B1**
(45) Date of publication and mention of the grant of the patent: **04.09.2024**
(21) Application number: 22183385.8
(22) Date of filing: 06.07.2022
(51) Int. Cl.: F28F 3/12, F28F 7/02, H05K 7/20

(54) **MANIFOLDING FOR MONOLITHIC REDUNDANT LOOP COLD PLATE UTILIZING ADJACENT THERMAL FEATURES**
VERTEILER FÜR MONOLITHISCHE REDUNDANTE SCHLEIFEN-KÜHLPLATTE UNTER VERWENDUNG BENACHBARTER THERMISCHER MERKMALE
COLLECTEUR POUR PLAQUE FROIDE À BOUCLE REDONDANTE MONOLITHIQUE UTILISANT DES CARACTÉRISTIQUES THERMIQUES ADJACENTES

(30) Priority: 09.07.2021 US 202117371787
(43) Date of publication of application: 11.01.2023
(73) Proprietor: Hamilton Sundstrand Corporation, Charlotte, NC 28217 (US)
(72) Inventor: ZAFFETTI, Mark A., Suffield, CT 06078 (US); STRANGE, Jeremy M., Windsor 06095 (US); RUIZ, Gabriel, Granby 06035 (US)
(74) Representative: Dehns

(56) References cited:
- EP-A1- 3 124 906
- EP-A1- 3 587 989
- EP-A1- 3 800 417

## Description

### BACKGROUND

The subject matter disclosed herein relates generally to the field of heat transfer devices, and specifically to redundant heat transfer systems. EP 3 124 906 A1 discloses a monolithic loop core plate core with the features of the preamble of claim 1.

Redundant cooling loops are typically required for critical heat removal applications in vehicles so that if a failure were to occur in a first cooling loop then the vehicle would still be able to function using a second cooling loop. Current redundant cooling loops utilize two stacked cooling layers, which stack a first cooling loop on top of a second cooling loop with the first cooling loop being closest to the heat source.

### BRIEF SUMMARY

According to one embodiment, a monolithic redundant loop cold plate core according to claim 1 is provided.

In addition to one or more of the features described above, or as an alternative, further embodiments may include that the plurality of first cooling loop passageways include a first cooling loop inlet ramp portion adjacent to the first cooling loop inlet manifold. The first cooling loop inlet ramp portion extends from the first cooling loop inlet manifold to a first cooling loop inlet ramp end. The first cooling loop inlet ramp portion is configured to expand a height or size of the plurality of first cooling loop passageways from the first cooling loop inlet manifold to the first cooling loop inlet ramp end.

In addition to one or more of the features described above, or as an alternative, further embodiments may include that the plurality of first cooling loop passageways include a first cooling loop outlet ramp portion adjacent to the first cooling loop outlet manifold. The first cooling loop outlet ramp portion extends from the first cooling loop outlet manifold to a first cooling loop outlet ramp end. The first cooling loop outlet ramp portion is configured to expand the height or size of the plurality of first cooling loop passageways from the first cooling loop outlet manifold to the first cooling loop outlet ramp end.

In addition to one or more of the features described above, or as an alternative, further embodiments may include that the plurality of first cooling loop passageways follow a non-linear pattern across the heat exchanger core. The non-linear pattern extends from the first cooling loop inlet ramp end to the first cooling loop outlet ramp end.

In addition to one or more of the features described above, or as an alternative, further embodiments may include that the plurality of first cooling loop passageways follow a non-linear pattern across the heat exchanger core. The non-linear pattern extends from the first cooling loop inlet manifold to the first cooling loop outlet manifold.

In addition to one or more of the features described above, or as an alternative, further embodiments may include that the plurality of first cooling loop passageways are linear in the first cooling loop inlet ramp portion.

In addition to one or more of the features described above, or as an alternative, further embodiments may include that the plurality of first cooling loop passageways follow a non-linear pattern in the first cooling loop inlet ramp portion.

In addition to one or more of the features described above, or as an alternative, further embodiments may include that the plurality of first cooling loop passageways are linear in the first cooling loop outlet ramp portion.

In addition to one or more of the features described above, or as an alternative, further embodiments may include that the plurality of first cooling loop passageways follow a non-linear pattern in the first cooling loop outlet ramp portion.

In addition to one or more of the features described above, or as an alternative, further embodiments may include that the plurality of second cooling loop passageways include a second cooling loop inlet ramp portion adjacent to the second cooling loop inlet manifold. The second cooling loop inlet ramp portion extends from the second cooling loop inlet manifold to a second cooling loop inlet ramp end. The second cooling loop inlet ramp portion is configured to expand a height or size of the plurality of second cooling loop passageways from the second cooling loop inlet manifold to the second cooling loop inlet ramp end.

In addition to one or more of the features described above, or as an alternative, further embodiments may include that the plurality of second cooling loop passageways include a second cooling loop outlet ramp portion adjacent to the second cooling loop outlet manifold. The second cooling loop outlet ramp portion extends from the second cooling loop outlet manifold to a second cooling loop outlet ramp end. The second cooling loop outlet ramp portion is configured to expand the height or size of the plurality of second cooling loop passageways from the second cooling loop outlet manifold to the second cooling loop outlet ramp end.

In addition to one or more of the features described above, or as an alternative, further embodiments may include that the plurality of second cooling loop passageways follow a non-linear pattern across the heat exchanger core. The non-linear pattern extends from the second cooling loop inlet ramp end to the second cooling loop outlet ramp end.

In addition to one or more of the features described above, or as an alternative, further embodiments may include that the plurality of second cooling loop passageways follow a non-linear pattern across the heat exchanger core. The non-linear pattern extends from the second cooling loop inlet manifold to the second cooling loop outlet manifold.

In addition to one or more of the features described above, or as an alternative, further embodiments may include that the plurality of second cooling loop passageways are linear in the second cooling loop inlet ramp portion.

In addition to one or more of the features described above, or as an alternative, further embodiments may include that the plurality of second cooling loop passageways follow a non-linear pattern in the second cooling loop inlet ramp portion.

In addition to one or more of the features described above, or as an alternative, further embodiments may include that the plurality of second cooling loop passageways are linear in the second cooling loop outlet ramp portion.

In addition to one or more of the features described above, or as an alternative, further embodiments may include that the plurality of second cooling loop passageways follow a non-linear pattern in the second cooling loop outlet ramp portion.

According to another embodiment a method of manufacturing a monolithic redundant loop cold plate core according to claim 15 is provided.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION

The following descriptions should not be considered limiting in any way. With reference to the accompanying drawings, like elements are numbered alike:
FIG. 1 illustrates a first or top cross-sectional view of a monolithic redundant loop cold plate core, according to an embodiment of the present disclosure;
FIG. 2 illustrates a second or bottom cross-sectional view of the monolithic redundant loop cold plate core, according to an embodiment of the present disclosure;
FIG. 3 illustrates an enlarged view of cooling loop passageways for a first cooling loop and a second cooling loop of the monolithic redundant loop cold plate core, in accordance with an embodiment of the present disclosure;
FIG. 4 illustrates a cross-sectional view a first pass of the monolithic redundant loop cold plate core, in accordance with an embodiment of the present disclosure;
FIG. 5 illustrates an enlarged view of the cooling loop passageways transitioning from the first pass to the first one-eighty turn, in accordance with an embodiment of the present disclosure;
FIG. 6 illustrates an enlarged view of the non-linear pattern of the first cooling loop passageways, the second cooling loop passageways, and the fin walls, in accordance with an embodiment of the present disclosure;
FIG. 7 illustrates an isometric wire mesh view of the monolithic redundant loop cold plate core, in accordance with an embodiment of the present disclosure;
FIG. 8A illustrates an inlet end of a core structure of the monolithic redundant loop cold plate core, in accordance with an embodiment of the present disclosure;
FIG. 8B illustrates an outlet end of the core structure of the monolithic redundant loop cold plate core, in accordance with an embodiment of the present disclosure;
FIG. 9 illustrates an isometric wire mesh view of the monolithic redundant loop cold plate core, in accordance with an embodiment of the present disclosure;
FIG. 10A illustrates an inlet end of a core structure of the monolithic redundant loop cold plate core, in accordance with an embodiment of the present disclosure;
FIG. 10B illustrates an outlet end of the core structure of the monolithic redundant loop cold plate core, in accordance with an embodiment of the present disclosure; and
FIG. 11 illustrates a flow chart of a method of manufacturing the monolithic redundant loop cold plate core, in accordance with an embodiment of the present disclosure.

### DETAILED DESCRIPTION

A detailed description of one or more embodiments of the disclosed apparatus and method are presented herein by way of exemplification and not limitation with reference to the Figures.

As previously noted, redundant cooling loops are typically required for critical heat removal applications in vehicles so that if a failure were to occur in a first cooling loop then the vehicle would still be able to function using a second cooling loop. As also noted, current redundant plate and fin cooling loops utilize two stacked cooling layers, which stack a first cooling loop on top of a second cooling loop with the first cooling loop being closest to the heat source. Therefore, if the first cooling loop fails then heat must travel through the failed first cooling loop to reach the second cooling loop. Embodiments disclosed herein seek to provide a second cooling loop that is side-by-side with the first cooling loop and not in a stacked arranged such that, if the first cooling loop were to fail, heat would not have to transfer through the first cooling loop to reach the second cooling loop.

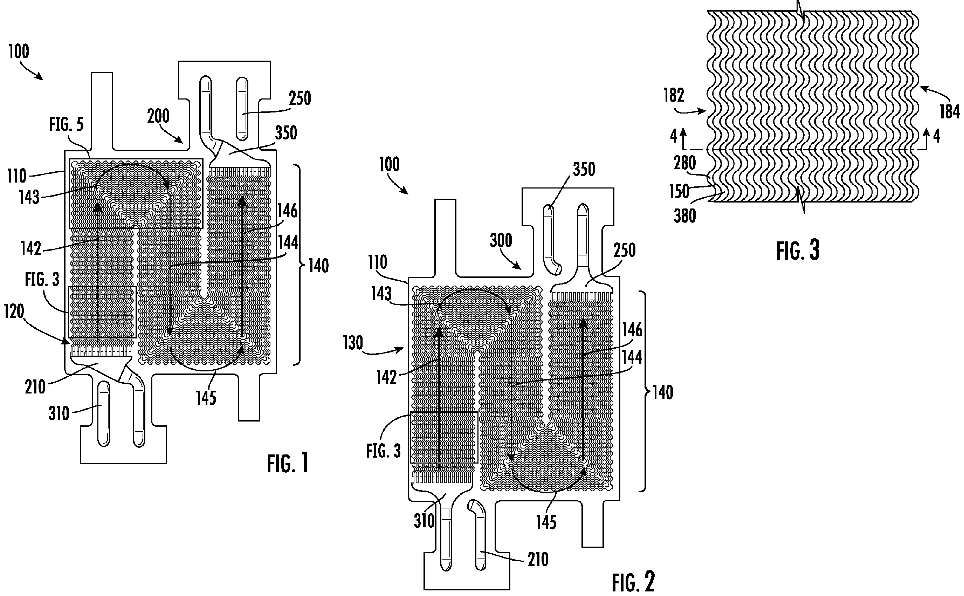

Referring now to FIGS. 1, 2, and 3, various cross-sectional views of a monolithic redundant loop cold plate core 100 are illustrated, according to an embodiment of the present disclosure. FIG. 1 illustrates a first or top view of the monolithic redundant loop cold plate core 100, FIG. 2 illustrates a second or bottom view of the monolithic redundant loop cold plate core 100, and FIG. 3 illustrates an enlarged view of cooling loop passageways 280, 380 for a first cooling loop 200 and a second cooling loop 300 of the monolithic redundant loop cold plate core 100, according to an embodiment of the present disclosure. While the exemplary monolithic redundant loop cold plate core 100 is illustrated as a three-pass heat exchanger for explanatory purposes, it is understood that the monolithic redundant loop cold plate core 100 many include any number of passes in alternate embodiments.

The monolithic redundant loop cold plate core 100 is a monolithic structure rather than being assembled from separate individually formed components that are then assembled. The term monolithic may be defined as an object that is cast or formed as single piece without joints or seams. In other words, the monolithic redundant loop cold plate core 100 is formed as a single piece comprising a unitary structure. In an embodiment, the monolithic redundant loop cold plate core 100 has no joints or seams. The monolithic redundant loop cold plate core 100 may be manufactured or formed via an additive manufacturing technique known to one of skill in the art. In an embodiment, the monolithic redundant loop cold plate core 100 may be manufactured by growing the structure one layer at a time where a laser is used to fuse powder together in one monolithic structure one layer at a time. In an embodiment, the monolithic redundant loop cold plate core 100 may be manufactured by laser powder bed fusion (L-PBF) additive manufacturing.

The monolithic redundant loop cold plate core 100 includes a core structure 110 having a first portion 120 and a second portion 130. In an embodiment the first portion 120 may be an upper portion and the second portion 130 may be a lower portion or vice-versa depending on which way the monolithic redundant loop cold plate core 100 is gravitationally oriented. The core structure 110 includes a first cooling loop 200 formed within the core 100 and a second cooling loop 300 formed within the core structure 110.

The first cooling loop 200 is configured to convey a first coolant through the monolithic redundant loop cold plate core 100. In an embodiment, the first coolant may be air or a mixture of water and propylene glycol (PGW). The first cooling loop 200 includes a first cooling loop inlet manifold 210 and a first cooling loop outlet manifold 250. The first cooling loop inlet manifold 210 may be located in the first portion 120 and the first cooling loop outlet manifold 250 may be located in the second portion 130. The first cooling loop outlet manifold 250 is fluidly connected to the first cooling loop inlet manifold 210 through one or more first cooling loop passageways 280. The one or more first cooling loop passageways 280 extend across a heat exchanger core 140. The first cooling loop inlet manifold 210 is fluidly connected to the one or more first cooling loop passageways 280. The first cooling loop inlet manifold 210 is configured to divide the first coolant into the one or more first cooling loop passageways 280. The first cooling loop outlet manifold 250 is fluidly connected to the one or more first cooling loop passageways 280. The first cooling loop outlet manifold 250 is configured to combine the first coolant from the one or more first cooling loop passageways 280.

In an embodiment, the one or more first cooling loop passageways 280 make three passes across the heat exchanger core 140, which include a first pass 142, a second pass 144, and a third pass 146. It is understood that while three passes 142, 144, 146 are illustrated, the embodiments described herein may be applicable to the one or more first cooling loop passageways 280 making any number of passes across the heat exchanger core 140. The one or more first cooling loop passageways 280 may make a first one-eighty turn 143 connecting the first pass 142 to the second pass 144. The first one-eighty turn 143 turns the one or more first cooling loop passageways 280 one hundred and eighty degrees. Further, the one or more first cooling loop passageways 280 may make a second one-eighty turn 145 connecting the second pass 144 to the third pass 146. The second one-eighty turn 145 turns the one or more first cooling loop passageways 280 one hundred and eighty degrees. In an embodiment, the third pass 146 may be about parallel to the first pass 142 and the second pass 144.

The one or more first cooling loop passageways 280 may follow a non-linear pattern across the heat exchanger core 140 as shown in the enlarged view of FIG. 3. In an embodiment, the non-linear pattern may be a wave pattern. The fin walls 150 may define the non-linear pattern. Advantageously, the non-linear pattern of the one or more first cooling loop passageways 280 helps create more surface area for increased heat transfer between the first coolant and the core structure 110, as opposed to straight or linear cooling loop passageways. Also, advantageously, the non-linear pattern of the one or more first cooling loop passageways 280 helps generate turbulence within the one or more first cooling loop passageways 280 for increased heat transfer between the first coolant and the core structure 110, as opposed to straight or linear cooling loop passageways. The one or more first cooling loop passageways 280 may follow the non-linear pattern across an entire length of the one or more first cooling loop passageways 280 from the first cooling loop inlet manifold 210 to the first cooling loop outlet manifold 250. The one or more first cooling loop passageways 280 may follow the non-linear pattern across through the first pass 142, the first one-eighty turn 143, the second pass 144, the second one-eighty turn 145, and the third pass 146.

The second cooling loop 300 is configured to convey a second coolant through the monolithic redundant loop cold plate core 100. The second coolant is fluidly separated from the first coolant but may be the same coolant as the first coolant. In an embodiment, second coolant may be air or a mixture of water and PGW. The second cooling loop 300 includes a second cooling loop inlet manifold 310 and a second cooling loop outlet manifold 350. The second cooling loop inlet manifold 310 may be located in the second portion 130 and the second cooling loop outlet manifold 350 may be located in the first portion 120. The second cooling loop outlet manifold 350 is fluidly connected to the second cooling loop inlet manifold 310 through one or more second cooling loop passageways 380. The one or more second cooling loop passageways 380 extend across the heat exchanger core 140. The second cooling loop inlet manifold 310 is fluidly connected to the one or more second cooling loop passageways 380. The second cooling loop inlet manifold 310 is configured to divide the second coolant into the one or more second cooling loop passageways 380. The second cooling loop outlet manifold 350 is fluidly connected to the one or more second cooling loop passageways 380. The second cooling loop outlet manifold 350 is configured to combine the second coolant from the one or more second cooling loop passageways 380.

In an embodiment, the one or more second cooling loop passageways 380 make three passes across the heat exchanger core 140, which include a first pass 142, a second pass 144, and a third pass 146. It is understood that while three passes 142, 144, 146 are illustrated, the embodiments described herein may be applicable to the one or more second cooling loop passageways 380 making any number of passes across the heat exchanger core 140. The one or more second cooling loop passageways 380 may make a first one-eighty turn 143 connecting the first pass 142 to the second pass 144. The first one-eighty turn 143 turns the one or more second cooling loop passageways 380 one hundred and eighty degrees. Further, the one or more second cooling loop passageways 380 may make a second one-eighty turn 145 connecting the second pass 144 to the third pass 146. The second one-eighty turn 145 turns the one or more second cooling loop passageways 380 one hundred and eighty degrees. In an embodiment, the third pass 146 may be about parallel to the first pass 142 and the second pass 144.

The one or more second cooling loop passageways 380 may follow a non-linear pattern as shown in the enlarged view of FIG. 3. In an embodiment, the non-linear pattern may be a wave pattern. The fin walls 150 may define the non-linear pattern. Advantageously, the non-linear pattern of the one or more second cooling loop passageways 380 helps create more surface area for increased heat transfer between the second coolant and the core structure 110, as opposed to straight or linear cooling loop passageways. Also, advantageously, the non-linear pattern of the one or more second cooling loop passageways 380 helps generate turbulence within the one or more second cooling loop passageways 380 for increased heat transfer between the second coolant and the core structure 110, as opposed to straight or linear cooling loop passageways. The one or more second cooling loop passageways 380 may follow the non-linear pattern across an entire length of the one or more second cooling loop passageways 380 from the second cooling loop inlet manifold 310 to the second cooling loop outlet manifold 350. The one or more second cooling loop passageways 380 may follow the non-linear pattern across through the first pass 142, the first one-eighty turn 143, the second pass 144, the second one-eighty turn 145, and the third pass 146.

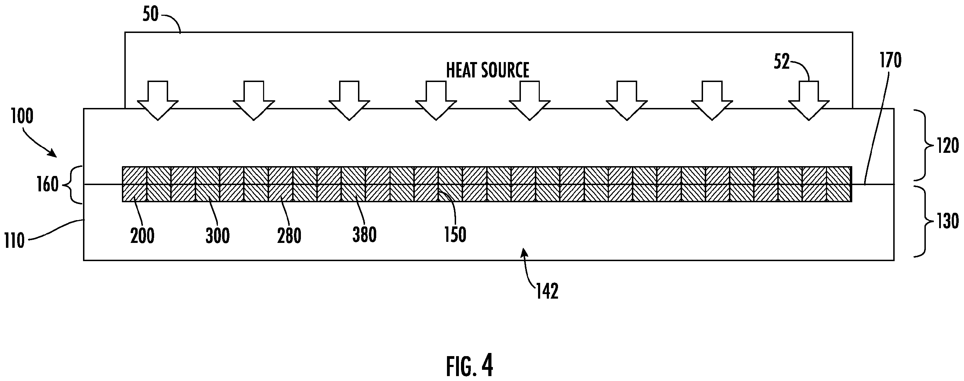

As illustrated in FIG. 3, the one or more first cooling loop passageways 280 are intermixed in an alternating side-by-side arrangement with the one or more second cooling loop passageways 380 in a single cooling plane (see FIG. 4). The one or more first cooling loop passageways 280 alternate with the one or more second cooling loop passageways 380 going from a first side 182 of the first pass 142 to a second side 184 of the first pass 142.

There may be at least one second cooling loop passageway 380 between each two first cooling loop passageways 280. For example, there may be at least two first cooling loop passageways 280 and at least one second cooling loop passageway 380 and the one second cooling loop passageways 380 is located between the two first cooling loop passageway 280.

There may be at least one first cooling loop passageway 280 between each two second cooling loop passageways 380. For example, there may be at least two second cooling loop passageways 380 and at least one first cooling loop passageway 280 and the one first cooling loop passageways 280 is located between the two second cooling loop passageway 380. In an embodiment, there are an equal number of first cooling loop passageways 280 and second cooling loop passageways 380.

Fin walls 150 may be formed within the core structure 110. The fin walls 150 may define each of the first cooling loop passageways 280 and each of the second cooling loop passageways 380 within the core structure 110.

Each of the one or more first cooling loop passageways 280 is separated from adjacent ones of the second cooling loop passageways 380 by fin walls 150 formed in the core structure 110. The fin walls 150 fluidly separate the first cooling loop passageways 280 from the second cooling loop passageways 380. The one or more first cooling loop passageways 280 flow about parallel with the one or more second cooling loop passageways 380 through the first pass 142, the first one-eighty turn 143, the second pass 144, the second one-eighty turn 145, and the third pass 146.

Referring now to FIG. 4, a cross-sectional view a first pass 142 of the monolithic redundant loop cold plate core 100 is illustrated, according to an embodiment of the present disclosure. It is understood that the arrangement shown in FIG. 4 along the first pass 142, according to an exemplary embodiment, is also applicable to the second pass 144, the third pass 146, the first one-eighty turn 143, and the second one-eighty turn 145 of the first cooling loop 200 and the second cooling loop 300 because the single cooling plane 160 remains planar throughout the entire core structure 110.

Coolant within the first cooling loop 200 and the second cooling loop 300 is configured to receive heat 52 from a heat source 50 through the core structure 110. It is understood that while the heat source 50 is illustrated as being adjacent to the first portion 120 for explanatory purposes, the heat source 50 may be adjacent to the second portion 130 according to alternate embodiments. It is also understood that there may be more than one heat source 50. The heat source 50 may be oriented about parallel to the single cooling plane 160, as illustrated in FIG. 4.

As shown in FIG. 4, the one or more first cooling loop passageways 280 are intermixed between the one or more second cooling loop passageways 380 in a single cooling plane 160, which allows each of the first cooling loop 200 and the second cooling loop 300 to receive an equal amount of heat 52 from a heat source 50. Advantageously, the heat 52 does not need to pass through the first cooling loop 200 to get to the second cooling loop 300. Also, advantageously, the heat 52 does not need to pass through the second cooling loop 300 to get to the first cooling loop 200.

A central plane 170 may separate the first portion 120 of the monolithic redundant loop cold plate core 100 from the second portion 130 of the monolithic redundant loop cold plate core 100. The central plane 170 may bifurcate the core structure 110 into two equal portions, such that the first portion 120 is about equal in size to the second portion 130.

The single cooling plane 160 may run parallel to and/or along the central plane 170, as illustrated in FIG. 4. The one or more first cooling loop passageways 280 may alternate with the one or more second cooling loop passageways 380 along the central plane 170, as illustrated in FIG. 4. Each of the one or more first cooling loop passageways 280 are separated from adjacent second cooling loop passageways 380 by the fin walls 150 formed in the core structure 110.

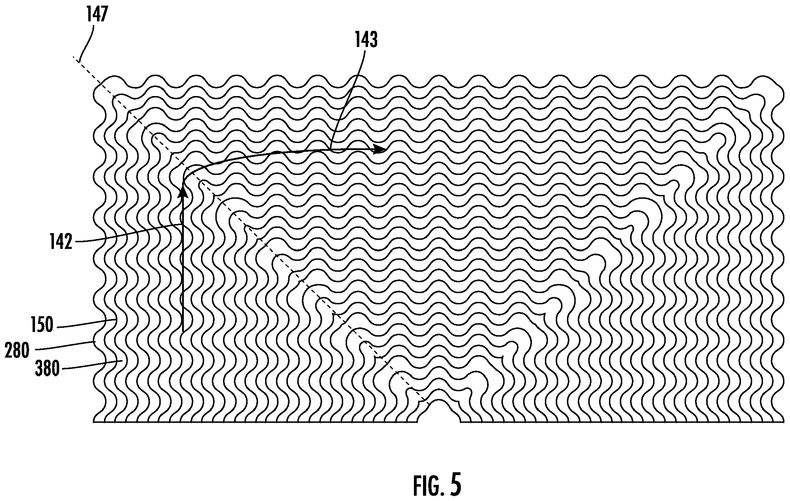

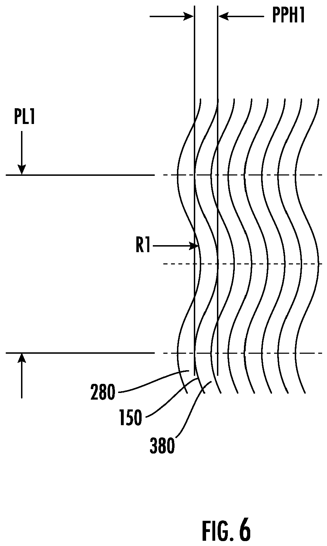

Referring now to FIG. 5, an enlarged view of the cooling loop passageways 280, 380 transitioning from the first pass 142 to the first one-eighty turn 143 is illustrated, according to an embodiment of the present disclosure. It is understood that the embodiment disclosed in FIG. 5 is also applicable to the cooling loop passageways 280, 380 transitioning from the first one-eighty turn 143 to the second pass 144, from the second pass 144 to the second one-eighty turn 145, and from the second one-eighty turn 145 to the third pass 146. As illustrated in FIG. 5, the first cooling loop passageways 280 and the second cooling loop passageways 380 maintain the non-linear pattern in the transition 147 from the first pass 142 to the first one-eighty turn 143. As illustrated in FIG. 5, the pitch length PL1 (see FIG. 6) of the first cooling loop passageways 280 and the second cooling loop passageways 380 of the non-linear pattern is also maintained in the transition 147 from the first pass 142 to the first one-eighty turn 143, which creates a unique geometry in the transition 147

Referring now to FIG. 6, an enlarged view of the non-linear pattern of the first cooling loop passageways 280, the second cooling loop passageways 380, and the fin walls 150 is illustrated, according to an embodiment of the present disclosure. As illustrated in FIG. 6, the fin walls 150 shape the first cooling loop passageways 280 and the second cooling loop passageways 380 into the non-linear pattern. In an embodiment, the non-linear pattern may be a wave pattern or more specifically a sine wave pattern. In an embodiment, the non-linear pattern may be a herringbone pattern or a louvered pattern. As illustrated in FIG. 6, the non-linear pattern may have specific characteristics including but not limited to a radius R1 of the non-linear pattern, a pitch length PL1 of the non-linear pattern, and a peak-to-peak height PPH1 of the non-linear pattern. Each of these characteristics may affect how much turbulence is generated within the first cooling loop passageways 280 and the second cooling loop passageways 380. Each of these characteristics may also affect how much heat 52 is transferred to the first cooling loop passageways 280 and the second cooling loop passageways 380. Advantageously, each of these characteristics may be optimized to maximize heat transfer while still meeting pressure drop and manufacturing constraints. The radius R1 of the non-linear pattern, the pitch length PL1 of the non-linear pattern, and the peak-to-peak height PPH1 of the non-linear pattern may vary along the lengths of the first cooling loop passageways 280 and the second cooling loop passageways 380.

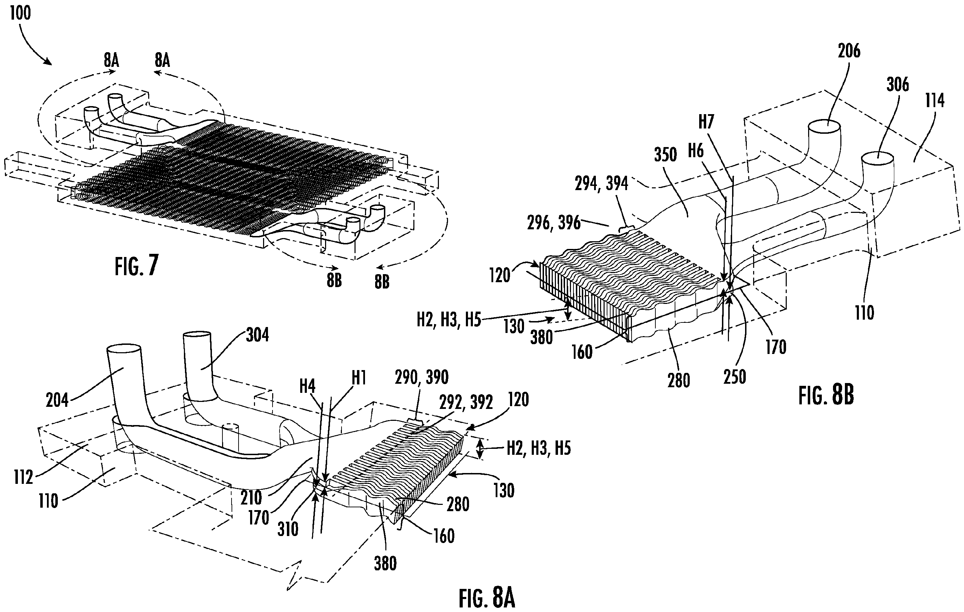

Referring now to FIGS. 7, 8A, and 8B, an isometric wire mesh view of the monolithic redundant loop cold plate core 100 is illustrated in FIG. 7 to more clearly demonstrate the locations of portions detailed in FIGS. 8A and 8B, in accordance with an embodiment of the disclosure.

FIG. 8A illustrates an inlet end 112 of the core structure 110. The inlet end 112 of the core structure 110 includes the first cooling loop inlet manifold 210 and the second cooling loop inlet manifold 310. A first cooling loop inlet passageway 204 may be fluidly connected to the first cooling loop inlet manifold 210 and configured to provide the first coolant to the first cooling loop inlet manifold 210. A second cooling loop inlet passageway 304 may be fluidly connected to the second cooling loop inlet manifold 310 and configured to provide the second coolant to the second cooling loop inlet manifold 310.

The central plane 170 separates the core structure 110 into the first portion 120 and the second portion 130. As shown, the first cooling loop inlet manifold 210 is located in the first portion 120 and the second cooling loop inlet manifold 310 is located in the second portion 130. If the first portion 120 is oriented gravitationally above the second portion 130, then the first cooling loop inlet manifold 210 is located gravitationally above the second cooling loop inlet manifold 310. Advantageously, since the first cooling loop inlet manifold 210 is stacked on the second cooling loop inlet manifold 310, the one or more first cooling loop passageways 280 may weave together with the one or more second cooling loop passageways 380, such that the one or more first cooling loop passageways 280 are intermixed in an alternating side-by-side arrangement with the one or more second cooling loop passageways 380 in a single cooling plane 160. It is understood that the embodiments disclosed herein are also applicable to the second cooling loop inlet manifold 310 being stacked on the first cooling loop inlet manifold 210. In an embodiment, the first cooling loop inlet manifold 210 and the second cooling loop inlet manifold 310 are organized in a stacked arrangement with each other. A stacked arrangement may be defined as where one component is vertically stacked on top of the other.

FIG. 8B illustrates an outlet end 114 of the core structure 110. The outlet end 114 of the core structure 110 includes the first cooling loop outlet manifold 250 and the second cooling loop outlet manifold 350. A first cooling loop outlet passageway 206 may be fluidly connected to the first cooling loop outlet manifold 250 and configured to receive the first coolant from the first cooling loop outlet manifold 250. A second cooling loop outlet passageway 306 may be fluidly connected to the second cooling loop outlet manifold 350 and configured to receive the second coolant from the second cooling loop outlet manifold 350.

The central plane 170 separates the core structure 110 into the first portion 120 and the second portion 130. As shown, the first cooling loop outlet manifold 250 is located in the second portion 130 and the second cooling loop outlet manifold 350 is located in the first portion 120. If the first portion 120 is oriented gravitationally above the second portion 130, then the second cooling loop outlet manifold 350 is located gravitationally above the first cooling loop outlet manifold 250. Advantageously, since the second cooling loop outlet manifold 350 is stacked on the first cooling loop outlet manifold 250, the one or more second cooling loop passageways 380 may weave together with the one or more first cooling loop passageways 280, such that the one or more first cooling loop passageways 280 are intermixed in an alternating side-by-side arrangement with the one or more second cooling loop passageways 380 in the single cooling plane 160. It is understood that the embodiments disclosed herein are also applicable to the first cooling loop outlet manifold 250 being stacked on the second cooling loop outlet manifold 350. In an embodiment, the first cooling loop outlet manifold 250 and the second cooling loop outlet manifold 350 are organized in a stacked arrangement with each other. A stacked arrangement may be defined as where one component is vertically stacked on top of the other.

As illustrated in FIG. 8A, the first cooling loop passageways 280 may include a first cooling loop inlet ramp portion 290 adjacent to the first cooling loop inlet manifold 210. The first cooling loop inlet ramp portion 290 extends from the first cooling loop inlet manifold 210 to a first cooling loop inlet ramp end 292. The first cooling loop inlet ramp portion 290 is configured to expand a height or size of the first cooling loop passageways 280 from the first cooling loop inlet manifold 210 to the first cooling loop inlet ramp end 292.

The first cooling loop passageway 280 has a first inlet manifold height H1 where the first cooling loop passageway 280 meets the first cooling loop inlet manifold 210 and the first cooling loop passageway 280 has a first cooling loop height H2 at the first cooling loop inlet ramp end 292. The first cooling loop height H2 is greater than the first inlet manifold height H1. The first cooling loop height H2 is equivalent to a height H3 of the single cooling plane 160.

As illustrated in FIG. 8A, the second cooling loop passageways 380 may include a second cooling loop inlet ramp portion 390 adjacent to the second cooling loop inlet manifold 310. The second cooling loop inlet ramp portion 390 extends from the second cooling loop inlet manifold 310 to a second cooling loop inlet ramp end 392. The second cooling loop inlet ramp portion 390 is configured to expand a height or size of the second cooling loop passageways 380 from the second cooling loop inlet manifold 310 to the second cooling loop inlet ramp end 392.

The second cooling loop passageway 380 has a second inlet manifold height H4 where the second cooling loop passageway 380 meets the second cooling loop inlet manifold 310 and the second cooling loop passageway 380 has a second cooling loop height H5 at the second cooling loop inlet ramp end 392. The second cooling loop height H5 is greater than the second inlet manifold height H4. The second cooling loop height H5 is equivalent to the height H3 of the single cooling plane 160.

The first inlet manifold height H1 and the second inlet manifold height H4 may be less than the height H3 of the single cooling plane 160, so that the first cooling loop inlet manifold 210 and the second cooling loop inlet manifold 310 may be stacked and fit within the height H3 of the single cooling plane 160.

As illustrated in FIG. 8B, the first cooling loop passageways 280 may include a first cooling loop outlet ramp portion 294 adjacent to the first cooling loop outlet manifold 250. The first cooling loop outlet ramp portion 294 extends from the first cooling loop outlet manifold 250 to a first cooling loop outlet ramp end 296. The first cooling loop outlet ramp portion 294 is configured to expand a height or size of the first cooling loop passageways 280 from the first cooling loop outlet manifold 250 to the first cooling loop outlet ramp end 296.

The first cooling loop passageway 280 has a first outlet manifold height H6 where the first cooling loop passageway 280 meets the first cooling loop outlet manifold 250 and the first cooling loop passageway 280 has a first cooling loop height H2 at the first cooling loop outlet ramp end 296. The first cooling loop height H2 is greater than the first outlet manifold height H6. The first cooling loop height H2 is equivalent to a height H3 of the single cooling plane 160.

As illustrated in FIG. 8B, the second cooling loop passageways 380 may include a second cooling loop outlet ramp portion 394 adjacent to the second cooling loop outlet manifold 350. The second cooling loop outlet ramp portion 394 extends from the second cooling loop outlet manifold 350 to a second cooling loop outlet ramp end 396. The second cooling loop outlet ramp portion 394 is configured to expand a height or size of the second cooling loop passageways 380 from the second cooling loop outlet manifold 350 to the second cooling loop outlet ramp end 396.

The second cooling loop passageway 380 has a second outlet manifold height H7 where the second cooling loop passageway 380 meets the second cooling loop outlet manifold 350 and the second cooling loop passageway 380 has a second cooling loop height H5 at the second cooling loop outlet ramp end 396. The second cooling loop height H5 is greater than the second outlet manifold height H7. The second cooling loop height H5 is equivalent to the height H3 of the single cooling plane 160.

The first outlet manifold height H6 and the second outlet manifold height H7 may be less than the height H3 of the single cooling plane 160, so that the first cooling loop outlet manifold 250 and the second cooling loop outlet manifold 350 may be stacked and fit within the height H3 of the single cooling plane 160.

In an embodiment, the first cooling loop height H2 is maintained from the first cooling loop inlet ramp end 292 to the first cooling loop inlet ramp end 296. In an embodiment, the second cooling loop height H5 is maintained from the second cooling loop inlet ramp end 392 to the second cooling loop outlet ramp end 396.

In an embodiment, the non-linear pattern may not be present within the first cooling loop inlet ramp portion 290, second cooling loop inlet ramp portion 390, the first cooling loop outlet ramp portion 294, and the second cooling loop outlet ramp portion 394, as illustrated in FIGS. 8A and 8B. In an embodiment, the first cooling loop passages 280 and the second cooling loop passages 380 may be straight or linear within the first cooling loop inlet ramp portion 290, second cooling loop inlet ramp portion 390, the first cooling loop outlet ramp portion 294, and the second cooling loop outlet ramp portion 394, as illustrated in FIGS. 8A and 8B. In an embodiment, the non-linear pattern may only be present in the first cooling loop passageway 280 from the first cooling loop inlet ramp end 292 to the first cooling loop outlet ramp end 296. In an embodiment, the non-linear pattern may only be present in the second cooling loop passageway 380 from the second cooling loop inlet ramp end 392 to the second cooling loop outlet ramp end 396.

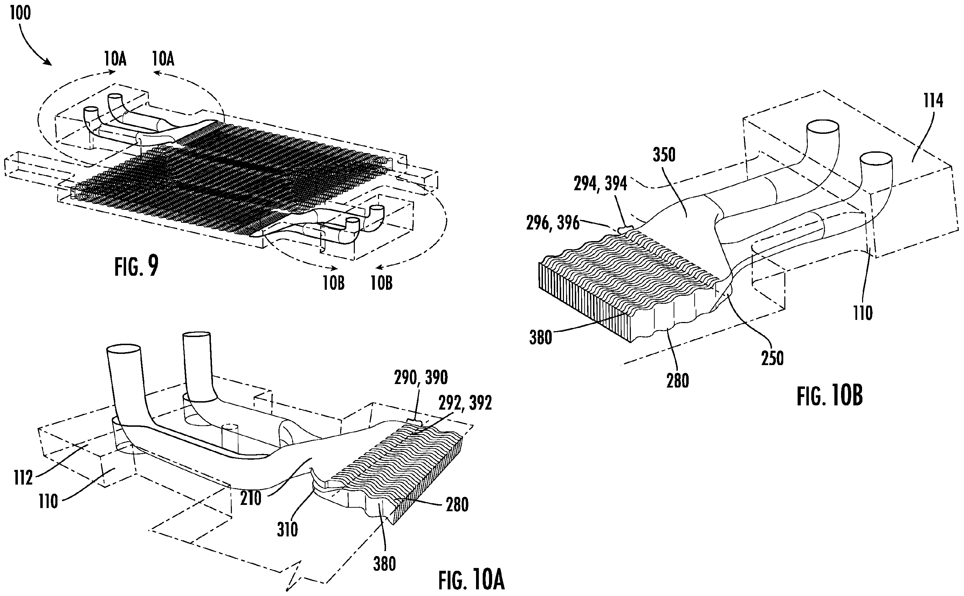

Referring now to FIGS. 9, 10A, and 10B, an isometric wire mesh view of the monolithic redundant loop cold plate core 100 is illustrated in FIG. 9 to more clearly demonstrate the locations of portions detailed in FIGS. 10A and 10B, in accordance with an embodiment of the disclosure. FIG. 10A illustrates an inlet end 112 of the core structure 110 and FIG. 10B illustrates an outlet end 114 of the core structure 110.

As illustrated in FIG. 10A, the first cooling loop passageways 280 may include a first cooling loop inlet ramp portion 290 adjacent to the first cooling loop inlet manifold 210. The first cooling loop inlet ramp portion 290 extends from the first cooling loop inlet manifold 210 to a first cooling loop inlet ramp end 292. The first cooling loop inlet ramp portion 290 is configured to expand a height or size of the first cooling loop passageways 280 from the first cooling loop inlet manifold 210 to the first cooling loop inlet ramp end 292.

As illustrated in FIG. 10A, the second cooling loop passageways 380 may include a second cooling loop inlet ramp portion 390 adjacent to the second cooling loop inlet manifold 310. The second cooling loop inlet ramp portion 390 extends from the second cooling loop inlet manifold 310 to a second cooling loop inlet ramp end 392. The second cooling loop inlet ramp portion 390 is configured to expand a height or size of the second cooling loop passageways 380 from the second cooling loop inlet manifold 310 to the second cooling loop inlet ramp end 392.

As illustrated in FIG. 10B, the first cooling loop passageways 280 may include a first cooling loop outlet ramp portion 294 adjacent to the first cooling loop outlet manifold 250. The first cooling loop outlet ramp portion 294 extends from the first cooling loop outlet manifold 250 to a first cooling loop outlet ramp end 296. The first cooling loop outlet ramp portion 294 is configured to expand a height or size of the first cooling loop passageways 280 from the first cooling loop outlet manifold 250 to the first cooling loop outlet ramp end 296.

As illustrated in FIG. 10B, the second cooling loop passageways 380 may include a second cooling loop outlet ramp portion 394 adjacent to the second cooling loop outlet manifold 350. The second cooling loop outlet ramp portion 394 extends from the second cooling loop outlet manifold 350 to a second cooling loop outlet ramp end 396. The second cooling loop outlet ramp portion 394 is configured to expand a height or size of the second cooling loop passageways 380 from the second cooling loop outlet manifold 350 to the second cooling loop outlet ramp end 396.

In the embodiment illustrated in FIG. 10A, the non-linear pattern is present within the first cooling loop inlet ramp portion 290 and second cooling loop inlet ramp portion 390. In the embodiment illustrated in FIG. 10B, the non-linear pattern is present within the first cooling loop outlet ramp portion 294 and the second cooling loop outlet ramp portion 394. In an embodiment, the non-linear pattern is a wave pattern.

In an embodiment, the non-linear pattern may be present in the first cooling loop passageway 280 from first cooling loop inlet manifold 210 to the first cooling loop outlet manifold 250. In an embodiment, the non-linear pattern may be present in the second cooling loop passageway 380 from the second cooling loop inlet manifold 310 to the second cooling loop outlet manifold 350. In an embodiment, the non-linear pattern is a wave pattern.

Advantageously, by extending the non-linear pattern to the ramp portions 290, 390, 294, 394 the overall heat transfer capability of the monolithic redundant loop cold plate core 100 is increased because the overall surface area for heat transfer is increased within the cooling loop passageways 280, 380 in the ramp portions 290, 390, 294, 394. Also, advantageously, by extending the non-linear pattern to the ramp portions 290, 390, 294, 394 the overall heat transfer capability of the monolithic redundant loop cold plate core 100 is increased because more turbulence is generated within the cooling loop passageways 280, 380 in the ramp portions 290, 390, 294, 394 and more turbulence increases heat transfer.

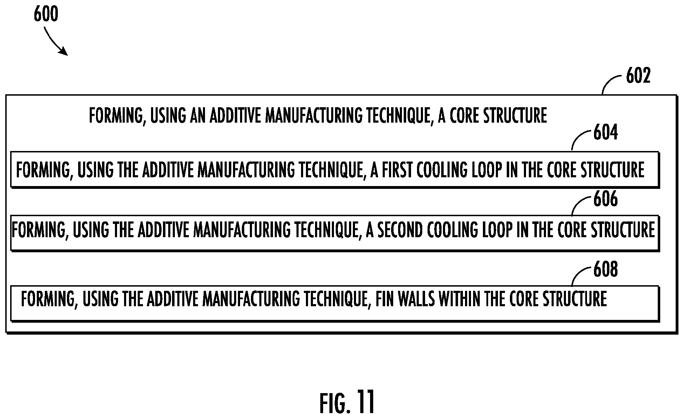

Referring now to FIG. 11, with continued reference to FIGS. 1 - 10B, a flow chart of a method 600 of manufacturing the monolithic redundant loop cold plate core 100 is illustrated, in accordance with an embodiment of the disclosure.

At block 602, a core structure 110 is formed using an additive manufacturing technique. In an embodiment, the additive manufacturing technique discussed throughout method 600 is laser powder bed fusion additive manufacturing. Block 602 includes block 604, block 606, and block 608.

At block 604, a first cooling loop 200 in the core structure 110 is formed using the additive manufacturing technique. The first cooling loop 200 including a plurality of first cooling loop passageways 280 extending across a heat exchanger core 140 in one or more passes. The one or more passes comprise at least a first pass 142.

At block 606, a second cooling loop 300 is formed in the core structure 110 using additive manufacturing technique. The second cooling loop 300 including a plurality of second cooling loop passageways 380 extending across the heat exchanger core 140 in the one or more passes.

In an embodiment, the plurality of first cooling loop passageways 280 are intermixed in an alternating side-by-side arrangement with the plurality of second cooling loop passageways 380 in a single cooling plane 160. In an embodiment, the monolithic redundant loop cold plate core 100 is a single piece comprising a unitary structure.

At block 608, fin walls 150 are formed in the core structure 110 using the additive manufacturing technique. The fin walls 150 define the one or more first cooling loop passageways 280 and fluidly separate the plurality of first cooling loop passageways 280 from the plurality of second cooling loop passageways 380. The fin walls 150 define the plurality of second cooling loop passageways 380 and fluidly separate the second cooling loop passageways 380 from the plurality of first cooling loop passageways 280.

While the above description has described the flow process of FIG. 11 in a particular order, it should be appreciated that unless otherwise specifically required in the attached claims that the ordering of the steps may be varied and the order of the steps may occur simultaneously or near simultaneously, such as in layers.

Technical effects and benefits of the features described herein include forming manifolds of a monolithic redundant loop cold plate core through additive manufacturing.

A detailed description of one or more embodiments of the disclosed apparatus and method are presented herein by way of exemplification and not limitation with reference to the Figures.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A monolithic redundant loop cold plate core, comprising:
a core structure (110);
a first cooling loop formed in the core structure (110), the first cooling loop comprising:
a plurality of first cooling loop passageways (280) extending across a heat exchanger core in one or more passes, wherein the one or more passes comprise at least a first pass;
a first cooling loop inlet manifold (210) fluidly connected to the plurality of first cooling loop passageways (280), the first cooling loop inlet manifold (210) being configured to divide a first coolant into the plurality of first cooling loop passageways (280); and
a first cooling loop outlet manifold (250) fluidly connected to the plurality of first cooling loop passageways (280), the first cooling loop outlet manifold (250) being configured to combine the first coolant from the plurality of first cooling loop passageways (280); and
a second cooling loop formed in the core structure (110), the second cooling loop comprising:
a plurality of second cooling loop passageways (380) extending across the heat exchanger core in the one or more passes;
a second cooling loop inlet manifold (310) fluidly connected to the plurality of second cooling loop passageways, the second cooling loop inlet manifold being configured to divide a second coolant into the plurality of second cooling loop passageways and being gravitationally below the first cooling loop inlet manifold (210); and
a second cooling loop outlet manifold (350) fluidly connected to the plurality of second cooling loop passageways, the second cooling loop outlet manifold (350) being configured to combine the second coolant from the plurality of second cooling loop passageways and being gravitationally above the first cooling loop outlet manifold,
wherein the plurality of first cooling loop passageways (280) are intermixed in an alternating side-by-side arrangement with the plurality of second cooling loop passageways in a single cooling plane, and
wherein the monolithic redundant loop cold plate core is a single piece comprising a unitary structure and **characterized in that** the first cooling loop inlet manifold (210) and the second cooling loop inlet manifold (310) are organized in a stacked arrangement with each other and first cooling loop outlet manifold (350) and the second cooling loop outlet manifold (250) are organized in a stacked arrangement
with each other;
wherein the first cooling loop inlet manifold is gravitationally above second cooling loop inlet manifold and the second cooling loop outlet manifold is gravitationally above the first cooling loop outlet manifold.

2. The monolithic redundant loop cold plate core of claim 1, wherein the plurality of first cooling loop passageways (280) include a first cooling loop inlet ramp portion adjacent to the first cooling loop inlet manifold (210), wherein the first cooling loop inlet ramp portion extends from the first cooling loop inlet manifold (210) to a first cooling loop inlet ramp end, and wherein the first cooling loop inlet ramp portion is configured to expand a height or size of the plurality of first cooling loop passageways (280) from the first cooling loop inlet manifold (210) to the first cooling loop inlet ramp end.

3. The monolithic redundant loop cold plate core of claim 2, wherein the plurality of first cooling loop passageways (280) include a first cooling loop outlet ramp portion adjacent to the first cooling loop outlet manifold (250), wherein the first cooling loop outlet ramp portion extends from the first cooling loop outlet manifold (250) to a first cooling loop outlet ramp end, and wherein the first cooling loop outlet ramp portion is configured to expand the height or size of the plurality of first cooling loop passageways (280) from the first cooling loop outlet manifold (250) to the first cooling loop outlet ramp end.

4. The monolithic redundant loop cold plate core of claim 3, wherein the plurality of first cooling loop passageways (280) follow a non-linear pattern across the heat exchanger core, and wherein the non-linear pattern extends from the first cooling loop inlet ramp end to the first cooling loop outlet ramp end, or wherein the plurality of first cooling loop passageways (280) follow a non-linear pattern across the heat exchanger core, and wherein the non-linear pattern extends from the first cooling loop inlet manifold (210) to the first cooling loop outlet manifold (250).

5. The monolithic redundant loop cold plate core of claim 3, wherein the plurality of first cooling loop passageways (280) are linear in the first cooling loop inlet ramp portion, or wherein the plurality of first cooling loop passageways (280) are linear in the first cooling loop outlet ramp portion.

6. The monolithic redundant loop cold plate core of claim 3, wherein the plurality of first cooling loop passageways (280) follow a non-linear pattern in the first cooling loop inlet ramp portion.

7. The monolithic redundant loop cool plate core of claim 3 or 6,wherein the plurality of first cooling loop passageways (280) follow a non-linear pattern in the first cooling loop outlet ramp portion.

8. The monolithic redundant loop cold plate core of any preceding claim, wherein the plurality of second cooling loop passageways include a second cooling loop inlet ramp portion adjacent to the second cooling loop inlet manifold, wherein the second cooling loop inlet ramp portion extends from the second cooling loop inlet manifold to a second cooling loop inlet ramp end, and wherein the second cooling loop inlet ramp portion is configured to expand a height or size of the plurality of second cooling loop passageways from the second cooling loop inlet manifold to the second cooling loop inlet ramp end.

9. The monolithic redundant loop cold plate core of claim 8, wherein the plurality of second cooling loop passageways include a second cooling loop outlet ramp portion adjacent to the second cooling loop outlet manifold, wherein the second cooling loop outlet ramp portion extends from the second cooling loop outlet manifold to a second cooling loop outlet ramp end, and wherein the second cooling loop outlet ramp portion is configured to expand the height or size of the plurality of second cooling loop passageways from the second cooling loop outlet manifold to the second cooling loop outlet ramp end.

10. The monolithic redundant loop cold plate core of claim 9, wherein the plurality of second cooling loop passageways follow a non-linear pattern across the heat exchanger core, wherein the non-linear pattern extends from the second cooling loop inlet ramp end to the second cooling loop outlet ramp end.

11. The monolithic redundant loop cold plate core of claim 9, wherein the plurality of second cooling loop passageways follow a non-linear pattern across the heat exchanger core, wherein the non-linear pattern extends from the second cooling loop inlet manifold to the second cooling loop outlet manifold.

12. The monolithic redundant loop cold plate core of claim 9, wherein the plurality of second cooling loop passageways are linear in the second cooling loop inlet ramp portion.

13. The monolithic redundant loop cold plate core of claim 9, wherein the plurality of second cooling loop passageways follow a non-linear pattern in the second cooling loop inlet ramp portion, or wherein the plurality of second cooling loop passageways follow a non-linear pattern in the second cooling loop outlet ramp portion.

14. The monolithic redundant loop cold plate core of claim 9, wherein the plurality of second cooling loop passageways are linear in the second cooling loop outlet ramp portion.

15. A method (600) of manufacturing a monolithic redundant loop cold plate core as defined in claim 1, the method comprising:
forming (602), using an additive manufacturing technique, a core structure (110), the forming comprising:
Forming (604), using the additive manufacturing technique, a first cooling loop in the core structure (110), the first cooling loop comprising:
a plurality of first cooling loop passageways (280) extending across a heat exchanger core in one or more passes, wherein the one or more passes comprise at least a first pass;
a first cooling loop inlet manifold (210) fluidly connected to the plurality of first cooling loop passageways (280), the first cooling loop inlet manifold (210) being configured to divide a first coolant into the plurality of first cooling loop passageways (280); and
a first cooling loop outlet manifold (250) fluidly connected to the plurality of first cooling loop passageways (280), the first cooling loop outlet manifold being configured to combine the first coolant from the plurality of first cooling loop passageways (280); and
forming (606), using the additive manufacturing technique, a second cooling loop in the core structure (110), the second cooling loop comprising:
a plurality of second cooling loop passageways extending across the heat exchanger core in the one or more passes;
a second cooling loop inlet manifold fluidly connected to the plurality of second cooling loop passageways, the second cooling loop inlet manifold being configured to divide a second coolant into the plurality of second cooling loop passageways; and
a second cooling loop outlet manifold fluidly connected to the plurality of second cooling loop passageways, the second cooling loop outlet manifold being configured to combine the second coolant from the plurality of second cooling loop passageways,
wherein the plurality of first cooling loop passageways (280) are intermixed in an alternating side-by-side arrangement with the plurality of second cooling loop passageways in a single cooling plane, and
wherein the monolithic redundant loop cold plate core is a single piece comprising a unitary structure; and **characterized in that** the first cooling loop inlet manifold and the second cooling loop inlet manifold are organized in a stacked arrangement with each other and first cooling loop outlet manifold and the second cooling loop outlet manifold are organized in a stacked arrangement with each other;
wherein the first cooling loop inlet manifold is gravitationally above second cooling loop inlet manifold and the second cooling loop outlet manifold is gravitationally above the first cooling loop outlet manifold.

## Patentansprüche

1. Monolithischer redundanter Schleifen-Kühlplattenkern, Folgendes umfassend:
eine Kernstruktur (110);
eine erste Kühlschleife, die in der Kernstruktur (110) gebildet ist, wobei die erste Kühlschleife Folgendes umfasst:
eine Vielzahl von ersten Kühlkreislaufdurchlässen (280), die sich in einem oder mehreren Durchgängen über einen Wärmetauscherkern erstreckt, wobei der eine oder die mehreren Durchgänge mindestens einen ersten Durchgang umfassen;
einen ersten Kühlkreislaufeinlassverteiler (210), der fluidisch mit der Vielzahl von ersten Kühlkreislaufdurchlässen (280) verbunden ist, wobei der erste Kühlkreislaufeinlassverteiler (210) konfiguriert ist, um ein erstes Kühlmittel in die Vielzahl von ersten Kühlkreislaufdurchlässen (280) aufzuteilen; und
einen ersten Kühlkreislaufauslassverteiler (250), der fluidisch mit der Vielzahl von ersten Kühlkreislaufdurchlässen (280) verbunden ist, wobei der erste Kühlkreislaufauslassverteiler (250) konfiguriert ist, um das erste Kühlmittel aus der Vielzahl von ersten Kühlkreislaufdurchlässen (280) zusammenzuführen; und
eine zweite Kühlschleife, die in der Kernstruktur (110) ausgebildet ist, wobei der zweite Kühlkreislauf Folgendes umfasst:
eine Vielzahl von zweiten Kühlkreislaufdurchlässen (380), die sich in dem einen oder den mehreren Durchgängen über den Wärmetauscherkern erstreckt;
einen zweiten Kühlkreislaufeinlassverteiler (310), der fluidisch mit der Vielzahl von zweiten Kühlkreislaufdurchlässen verbunden ist, wobei der zweite Kühlkreislaufeinlassverteiler konfiguriert ist, um ein zweites Kühlmittel in die Vielzahl von zweiten Kühlkreislaufdurchlässen aufzuteilen, und gravitativ unterhalb des ersten Kühlkreislaufeinlassverteilers (210) angeordnet ist; und
einen zweiten Kühlkreislaufauslassverteiler (350), der fluidisch mit der Vielzahl von zweiten Kühlkreislaufdurchlässen verbunden ist, wobei der zweite Kühlkreislaufauslassverteiler (350) konfiguriert ist, um das zweite Kühlmittel aus der Vielzahl von zweiten Kühlkreislaufdurchlässen zusammenzuführen, und gravitativ über dem ersten Kühlkreislaufauslassverteiler angeordnet ist,
wobei die Vielzahl von ersten Kühlkreislaufdurchlässen (280) in einer seitlichen Anordnung zueinander mit der Vielzahl von zweiten Kühlkreislaufdurchlässen in einer einzigen Kühlebene vermischt ist und
wobei der monolithische redundante Kühlplattenkern ein einteiliges Stück ist, das eine einheitliche Struktur umfasst und **dadurch gekennzeichnet ist, dass** der erste Kühlkreislaufeinlassverteiler (210) und der zweite Kühlkreislaufeinlassverteiler (310) in einer gestapelten Anordnung miteinander organisiert sind und der erste Kühlkreislaufauslassverteiler (350) und der zweite Kühlkreislaufauslassverteiler (250) in einer gestapelten Anordnung miteinander organisiert sind;
wobei der erste Kühlkreislaufeinlassverteiler gravitativ über dem zweiten Kühlkreislaufeinlassverteiler angeordnet ist und der zweite Kühlkreislaufauslassverteiler gravitativ über dem ersten Kühlkreislaufauslassverteiler angeordnet ist.

2. Monolithischer redundanter Schleifen-Kühlplattenkern nach Anspruch 1, wobei die Vielzahl von ersten Kühlkreislaufdurchlässen (280) einen ersten Kühlkreislaufeinlass-Rampenabschnitt benachbart zu dem ersten Kühlkreislaufeinlassverteiler (210) beinhaltet, wobei sich der erste Kühlkreislaufeinlass-Rampenabschnitt von dem ersten Kühlkreislaufeinlassverteiler (210) zu einem ersten Kühlkreislaufeinlass-Rampenende erstreckt und wobei der erste Kühlkreislaufeinlass-Rampenabschnitt konfiguriert ist, um eine Höhe oder Größe der Vielzahl von ersten Kühlkreislaufdurchlässen (280) von dem ersten Kühlkreislaufeinlassverteiler (210) zu dem ersten Kühlkreislaufeinlass-Rampenende zu erweitern.

3. Monolithischer redundanter Schleifen-Kühlplattenkern nach Anspruch 2, wobei die Vielzahl von ersten Kühlkreislaufdurchlässen (280) einen ersten Kühlkreislaufauslass-Rampenabschnitt benachbart zu dem ersten Kühlkreislaufauslassverteiler (250) beinhaltet, wobei sich der erste Kühlkreislaufauslass-Rampenabschnitt von dem ersten Kühlkreislaufauslassverteiler (250) zu einem ersten Kühlkreislaufauslass-Rampenende erstreckt und wobei der erste Kühlkreislaufauslass-Rampenabschnitt konfiguriert ist, um die Höhe oder Größe der Vielzahl von ersten Kühlkreislaufdurchlässen (280) von dem ersten Kühlkreislaufauslassverteiler (250) zu dem ersten Kühlkreislaufauslass-Rampenende zu erweitern.

4. Monolithischer redundanter Schleifen-Kühlplattenkern nach Anspruch 3, wobei die Vielzahl von ersten Kühlkreislaufdurchlässen (280) einem nichtlinearen Muster über den Wärmetauscherkern folgt und wobei sich das nichtlineare Muster von dem ersten Kühlkreislaufeinlass-Rampenende zu dem ersten Kühlkreislaufauslass-Rampenende erstreckt oder wobei die Vielzahl von ersten Kühlkreislaufdurchlässen (280) einem nichtlinearen Muster über den Wärmetauscherkern folgt und wobei sich das nichtlineare Muster von dem ersten Kühlkreislaufeinlassverteiler (210) zu dem ersten Kühlkreislaufauslassverteiler (250) erstreckt.

5. Monolithischer redundanter Schleifen-Kühlplattenkern nach Anspruch 3, wobei die Vielzahl von ersten Kühlkreislaufdurchlässen (280) in dem ersten Kühlkreislaufeinlass-Rampenabschnitt linear ist oder wobei die Vielzahl von ersten Kühlkreislaufdurchlässen (280) in dem ersten Kühlkreislaufauslass-Rampenabschnitt linear ist.

6. Monolithischer redundanter Schleifen-Kühlplattenkern nach Anspruch 3, wobei die Vielzahl von ersten Kühlkreislaufdurchlässen (280) einem nichtlinearen Muster in dem ersten Kühlkreislaufeinlass-Rampenabschnitt folgt.

7. Monolithischer redundanter Schleifen-Kühlplattenkern nach Anspruch 3 oder 6, wobei die Vielzahl von ersten Kühlkreislaufdurchlässen (280) in dem ersten Kühlkreislaufauslass-Rampenabschnitt einem nichtlinearen Muster folgt.

8. Monolithischer redundanter Schleifen-Kühlplattenkern nach einem der vorhergehenden Ansprüche, wobei die Vielzahl von zweiten Kühlkreislaufdurchlässen einen zweiten Kühlkreislaufeinlass-Rampenabschnitt benachbart zu dem zweiten Kühlkreislaufeinlassverteiler beinhaltet, wobei sich der zweite Kühlkreislaufeinlass-Rampenabschnitt von dem zweiten Kühlkreislaufeinlassverteiler zu einem zweiten Kühlkreislaufeinlass-Rampenende erstreckt und wobei der zweite Kühlkreislaufeinlass-Rampenabschnitt konfiguriert ist, um eine Höhe oder Größe der Vielzahl von zweiten Kühlkreislaufdurchlässen von dem zweiten Kühlkreislaufeinlassverteiler zu dem zweiten Kühlkreislaufeinlass-Rampenende zu erweitern.

9. Monolithischer redundanter Schleifen-Kühlplattenkern nach Anspruch 8, wobei die Vielzahl von zweiten Kühlkreislaufdurchlässen einen zweiten Kühlkreislaufauslass-Rampenabschnitt benachbart zu dem zweiten Kühlkreislaufauslassverteiler beinhaltet, wobei sich der zweite Kühlkreislaufauslass-Rampenabschnitt von dem zweiten Kühlkreislaufauslassverteiler zu einem zweiten Kühlkreislaufauslass-Rampenende erstreckt und wobei der zweite Kühlkreislaufauslass-Rampenabschnitt konfiguriert ist, um die Höhe oder Größe der Vielzahl von zweiten Kühlkreislaufdurchlässen von dem zweiten Kühlkreislaufauslassverteiler zu dem zweiten Kühlkreislaufauslass-Rampenende zu erweitern.

10. Monolithischer redundanter Schleifen-Kühlplattenkern nach Anspruch 9, wobei die Vielzahl von zweiten Kühlkreislaufdurchlässen einem nichtlinearen Muster über den Wärmetauscherkern folgt, wobei sich das nichtlineare Muster von dem zweiten Kühlkreislaufeinlass-Rampenende zu dem zweiten Kühlkreislaufauslass-Rampenende erstreckt.

11. Monolithischer redundanter Schleifen-Kühlplattenkern nach Anspruch 9, wobei die Vielzahl von zweiten Kühlkreislaufdurchlässen einem nichtlinearen Muster über den Wärmetauscherkern folgt, wobei sich das nichtlineare Muster von dem zweiten Kühlkreislaufeinlassverteiler zu dem zweiten Kühlkreislaufauslassverteiler erstreckt.

12. Monolithischer redundanter Schleifen-Kühlplattenkern nach Anspruch 9, wobei die Vielzahl von zweiten Kühlkreislaufdurchlässen in dem zweiten Kühlkreislaufeinlass-Rampenabschnitt linear ist.

13. Monolithischer redundanter Schleifen-Kühlplattenkern nach Anspruch 9, wobei die Vielzahl von zweiten Kühlkreislaufdurchlässen einem nichtlinearen Muster in dem zweiten Kühlkreislaufeinlass-Rampenabschnitt folgt oder wobei die Vielzahl von zweiten Kühlkreislaufdurchlässen einem nichtlinearen Muster in dem zweiten Kühlkreislaufauslass-Rampenabschnitt folgt.

14. Monolithischer redundanter Schleifen-Kühlplattenkern nach Anspruch 9, wobei die Vielzahl von zweiten Kühlkreislaufdurchlässen in dem zweiten Kühlkreislaufauslass-Rampenabschnitt linear ist.

15. Verfahren (600) zum Herstellen eines monolithischen redundanten Schleifen-Kühlplattenkerns nach Anspruch 1, wobei das Verfahren Folgendes umfasst:
Bilden (602), unter Verwendung einer additiven Herstellungstechnik, einer Kernstruktur (110), wobei das Bilden Folgendes umfasst:
Bilden (604), unter Verwendung der additiven Herstellungstechnik, einer ersten Kühlschleife in der Kernstruktur (110), wobei die erste Kühlschleife Folgendes umfasst:
eine Vielzahl von ersten Kühlkreislaufdurchlässen (280), die sich in einem oder mehreren Durchgängen über einen Wärmetauscherkern erstreckt, wobei der eine oder die mehreren Durchgänge mindestens einen ersten Durchgang umfassen;
einen ersten Kühlkreislaufeinlassverteiler (210), der fluidisch mit der Vielzahl von ersten Kühlkreislaufdurchlässen (280) verbunden ist, wobei der erste Kühlkreislaufeinlassverteiler (210) konfiguriert ist, um ein erstes Kühlmittel in die Vielzahl von ersten Kühlkreislaufdurchlässen (280) aufzuteilen; und
einen ersten Kühlkreislaufauslassverteiler (250), der fluidisch mit der Vielzahl von ersten Kühlkreislaufdurchlässen (280) verbunden ist, wobei der erste Kühlkreislaufauslassverteiler konfiguriert ist, um das erste Kühlmittel aus der Vielzahl von ersten Kühlkreislaufdurchlässen (280) zusammenzuführen; und
Bilden (606), unter Verwendung der additiven Herstellungstechnik, einer zweiten Kühlschleife in der Kernstruktur (110), wobei die zweite Kühlschleife Folgendes umfasst:
eine Vielzahl von zweiten Kühlkreislaufdurchlässen, die sich in dem einen oder den mehreren Durchgängen über den Wärmetauscherkern erstreckt;
einen zweiten Kühlkreislaufeinlassverteiler, der fluidisch mit der Vielzahl von zweiten Kühlkreislaufdurchlässen verbunden ist, wobei der zweite Kühlkreislaufeinlassverteiler konfiguriert ist, um ein zweites Kühlmittel in die Vielzahl von zweiten Kühlkreislaufdurchlässen aufzuteilen; und
einen zweiten Kühlkreislaufauslassverteiler, der fluidisch mit der Vielzahl von zweiten Kühlkreislaufdurchlässen verbunden ist, wobei der zweite Kühlkreislaufauslassverteiler konfiguriert ist, um das zweite Kühlmittel aus der Vielzahl von zweiten Kühlkreislaufdurchlässen zusammenzuführen,
wobei die Vielzahl von ersten Kühlkreislaufdurchlässen (280) in einer seitlichen Anordnung zueinander mit der Vielzahl von zweiten Kühlkreislaufdurchlässen in einer einzigen Kühlebene vermischt ist und
wobei der monolithische redundante Schleifen-Kühlplattenkern ein einteiliges Stück ist, das eine einheitliche Struktur umfasst; und **dadurch gekennzeichnet ist, dass** der erste Kühlkreislaufeinlassverteiler und der zweite Kühlkreislaufeinlassverteiler in einer gestapelten Anordnung miteinander organisiert sind und der erste Kühlkreislaufauslassverteiler und der zweite Kühlkreislaufauslassverteiler in einer gestapelten Anordnung miteinander organisiert sind;
wobei der erste Kühlkreislaufeinlassverteiler gravitativ über dem zweiten Kühlkreislaufeinlassverteiler angeordnet ist und der zweite Kühlkreislaufauslassverteiler gravitativ über dem ersten Kühlkreislaufauslassverteiler angeordnet ist.

## Revendications

1. Noyau de plaque froide à boucle redondante monolithique, comprenant :
une structure de noyau (110) ;
une première boucle de refroidissement formée dans la structure de noyau (110), la première boucle de refroidissement comprenant :
une pluralité de passages de première boucle de refroidissement (280) s'étendant à travers un noyau d'échangeur de chaleur en un ou plusieurs passages, dans lequel l'un ou les plusieurs passages comprennent au moins un premier passage ;
un collecteur d'entrée de première boucle de refroidissement (210) relié fluidiquement à la pluralité de passages de première boucle de refroidissement (280), le collecteur d'entrée de première boucle de refroidissement (210) étant conçu pour diviser un premier liquide de refroidissement en la pluralité de passages de première boucle de refroidissement (280) ; et
un collecteur de sortie de première boucle de refroidissement (250) relié fluidiquement à la pluralité de passages de première boucle de refroidissement (280), le collecteur de sortie de première boucle de refroidissement (250) étant conçu pour combiner le premier liquide de refroidissement provenant de la pluralité de passages de première boucle de refroidissement (280) ; et
une seconde boucle de refroidissement formée dans la structure de noyau (110), la seconde boucle de refroidissement comprenant :
une pluralité de passages de seconde boucle de refroidissement (380) s'étendant à travers le noyau d'échangeur de chaleur dans l'un ou les plusieurs passages ;
un collecteur d'entrée de seconde boucle de refroidissement (310) relié fluidiquement à la pluralité de passages de seconde boucle de refroidissement, le collecteur d'entrée de seconde boucle de refroidissement étant conçu pour diviser un second liquide de refroidissement en la pluralité de passages de seconde boucle de refroidissement et étant gravitationnellement en dessous du collecteur d'entrée de première boucle de refroidissement (210) ; et
un collecteur de sortie de seconde boucle de refroidissement (350) relié fluidiquement à la pluralité de passages de seconde boucle de refroidissement, le collecteur de sortie de seconde boucle de refroidissement (350) étant conçu pour combiner le second liquide de refroidissement provenant de la pluralité de passages de seconde boucle de refroidissement et étant gravitationnellement au-dessus du collecteur de sortie de première boucle de refroidissement,
dans lequel la pluralité de passages de première boucle de refroidissement (280) sont mélangés dans un agencement côte à côte en alternance avec la pluralité de passages de seconde boucle de refroidissement dans un seul plan de refroidissement, et
dans lequel le noyau de plaque froide à boucle redondante monolithique est une pièce unique comprenant une structure unitaire et **caractérisé en ce que** le collecteur d'entrée de première boucle de refroidissement (210) et le collecteur d'entrée de seconde boucle de refroidissement (310) sont organisés dans un agencement empilé l'un avec l'autre et le collecteur de sortie de première boucle de refroidissement (350) et le collecteur de sortie de seconde boucle de refroidissement (250) sont organisés dans un agencement empilé l'un avec l'autre ;
dans lequel le collecteur d'entrée de première boucle de refroidissement est gravitationnellement au-dessus du collecteur d'entrée de seconde boucle de refroidissement et le collecteur de sortie de seconde boucle de refroidissement est gravitationnellement au-dessus du collecteur de sortie de première boucle de refroidissement.

2. Noyau de plaque froide à boucle redondante monolithique selon la revendication 1, dans lequel la pluralité de passages de première boucle de refroidissement (280) comportent une partie de rampe d'entrée de première boucle de refroidissement adjacente au collecteur d'entrée de première boucle de refroidissement (210), dans lequel la partie de rampe d'entrée de première boucle de refroidissement s'étend du collecteur d'entrée de première boucle de refroidissement (210) à une extrémité de rampe d'entrée de première boucle de refroidissement, et dans lequel la partie de rampe d'entrée de première boucle de refroidissement est conçue pour étendre une hauteur ou une taille de la pluralité de passages de première boucle de refroidissement (280) du collecteur d'entrée de première boucle de refroidissement (210) à l'extrémité de rampe d'entrée de première boucle de refroidissement.

3. Noyau de plaque froide à boucle redondante monolithique selon la revendication 2, dans lequel la pluralité de passages de première boucle de refroidissement (280) comportent une partie de rampe de sortie de première boucle de refroidissement adjacente au collecteur de sortie de première boucle de refroidissement (250), dans lequel la partie de rampe de sortie de première boucle de refroidissement s'étend du collecteur de sortie de première boucle de refroidissement (250) à une extrémité de rampe de sortie de première boucle de refroidissement, et dans lequel la partie de rampe de sortie de première boucle de refroidissement est conçue pour étendre la hauteur ou la taille de la pluralité de passages de première boucle de refroidissement (280) du collecteur de sortie de première boucle de refroidissement (250) à l'extrémité de rampe de sortie de première boucle de refroidissement.

4. Noyau de plaque froide à boucle redondante monolithique selon la revendication 3, dans lequel la pluralité de passages de première boucle de refroidissement (280) suivent un motif non linéaire à travers le noyau d'échangeur de chaleur, et dans lequel le motif non linéaire s'étend de l'extrémité de rampe d'entrée de première boucle de refroidissement à l'extrémité de rampe de sortie de première boucle de refroidissement, ou dans lequel la pluralité de passages de première boucle de refroidissement (280) suivent un motif non linéaire à travers le noyau d'échangeur de chaleur, et dans lequel le motif non linéaire s'étend du collecteur d'entrée de première boucle de refroidissement (210) au collecteur de sortie de première boucle de refroidissement (250).

5. Noyau de plaque froide à boucle redondante monolithique selon la revendication 3, dans lequel la pluralité de passages de première boucle de refroidissement (280) sont linéaires dans la partie de rampe d'entrée de première boucle de refroidissement, ou dans lequel la pluralité de passages de première boucle de refroidissement (280) sont linéaires dans la partie de rampe de sortie de première boucle de refroidissement.

6. Noyau de plaque froide à boucle redondante monolithique selon la revendication 3, dans lequel la pluralité de passages de première boucle de refroidissement (280) suivent un motif non linéaire dans la partie de rampe d'entrée de première boucle de refroidissement.

7. Noyau de plaque froide à boucle redondante monolithique selon la revendication 3 ou 6, dans lequel la pluralité de passages de première boucle de refroidissement (280) suivent un motif non linéaire dans la partie de rampe de sortie de première boucle de refroidissement.

8. Noyau de plaque froide à boucle redondante monolithique selon une quelconque revendication précédente, dans lequel la pluralité de passages de seconde boucle de refroidissement comportent une partie de rampe d'entrée de seconde boucle de refroidissement adjacente au collecteur d'entrée de seconde boucle de refroidissement, dans lequel la partie de rampe d'entrée de seconde boucle de refroidissement s'étend du collecteur d'entrée de seconde boucle de refroidissement à une extrémité de rampe d'entrée de seconde boucle de refroidissement, et dans lequel la partie de rampe d'entrée de seconde boucle de refroidissement est conçue pour étendre une hauteur ou une taille de la pluralité de passages de seconde boucle de refroidissement du collecteur d'entrée de seconde boucle de refroidissement à l'extrémité de rampe d'entrée de seconde boucle de refroidissement.

9. Noyau de plaque froide à boucle redondante monolithique selon la revendication 8, dans lequel la pluralité de passages de seconde boucle de refroidissement comportent une partie de rampe de sortie de seconde boucle de refroidissement adjacente au collecteur de sortie de seconde boucle de refroidissement, dans lequel la partie de rampe de sortie de seconde boucle de refroidissement s'étend du collecteur de sortie de seconde boucle de refroidissement à une extrémité de rampe de sortie de seconde boucle de refroidissement, et dans lequel la partie de rampe de sortie de seconde boucle de refroidissement est conçue pour étendre la hauteur ou la taille de la pluralité de passages de seconde boucle de refroidissement du collecteur de sortie de seconde boucle de refroidissement à l'extrémité de rampe de sortie de seconde boucle de refroidissement.

10. Noyau de plaque froide à boucle redondante monolithique selon la revendication 9, dans lequel la pluralité de passages de seconde boucle de refroidissement suivent un motif non linéaire à travers le noyau d'échangeur de chaleur, dans lequel le motif non linéaire s'étend de l'extrémité de rampe d'entrée de seconde boucle de refroidissement à l'extrémité de rampe de sortie de seconde boucle de refroidissement.

11. Noyau de plaque froide à boucle redondante monolithique selon la revendication 9, dans lequel la pluralité de passages de seconde boucle de refroidissement suivent un motif non linéaire à travers le noyau d'échangeur de chaleur, dans lequel le motif non linéaire s'étend du collecteur d'entrée de seconde boucle de refroidissement au collecteur de sortie de seconde boucle de refroidissement.

12. Noyau de plaque froide à boucle redondante monolithique selon la revendication 9, dans lequel la pluralité de passages de seconde boucle de refroidissement sont linéaires dans la partie de rampe d'entrée de seconde boucle de refroidissement.

13. Noyau de plaque froide à boucle redondante monolithique selon la revendication 9, dans lequel la pluralité de passages de seconde boucle de refroidissement suivent un motif non linéaire dans la partie de rampe d'entrée de seconde boucle de refroidissement, ou dans lequel la pluralité de passages de seconde boucle de refroidissement suivent un motif non linéaire dans la partie de rampe de sortie de seconde boucle de refroidissement.

14. Noyau de plaque froide à boucle redondante monolithique selon la revendication 9, dans lequel la pluralité de passages de seconde boucle de refroidissement sont linéaires dans la partie de rampe de sortie de seconde boucle de refroidissement.

15. Procédé (600) de fabrication d'un noyau de plaque froide à boucle redondante monolithique tel que défini dans la revendication 1, le procédé comprenant :
la formation (602), à l'aide d'une technique de fabrication additive, d'une structure de noyau (110), la formation comprenant :
la formation (604), à l'aide de la technique de fabrication additive, d'une première boucle de refroidissement dans la structure de noyau (110), la première boucle de refroidissement comprenant :
une pluralité de passages de première boucle de refroidissement (280) s'étendant à travers un noyau d'échangeur de chaleur en un ou plusieurs passages, dans lequel l'un ou les plusieurs passages comprennent au moins un premier passage ;
un collecteur d'entrée de première boucle de refroidissement (210) relié fluidiquement à la pluralité de passages de première boucle de refroidissement (280), le collecteur d'entrée de première boucle de refroidissement (210) étant conçu pour diviser un premier liquide de refroidissement en la pluralité de passages de première boucle de refroidissement (280) ; et
un collecteur de sortie de première boucle de refroidissement (250) relié fluidiquement à la pluralité de passages de première boucle de refroidissement (280), le collecteur de sortie de première boucle de refroidissement étant conçu pour combiner le premier liquide de refroidissement de la pluralité de passages de première boucle de refroidissement (280) ; et
la formation (606), à l'aide de la technique de fabrication additive, d'une seconde boucle de refroidissement dans la structure de noyau (110), la seconde boucle de refroidissement comprenant :
une pluralité de passages de seconde boucle de refroidissement s'étendant à travers le noyau d'échangeur de chaleur dans l'un ou les plusieurs passages ;
un collecteur d'entrée de seconde boucle de refroidissement relié fluidiquement à la pluralité de passages de seconde boucle de refroidissement, le collecteur d'entrée de seconde boucle de refroidissement étant conçu pour diviser un second liquide de refroidissement en la pluralité de passages de seconde boucle de refroidissement ; et
un collecteur de sortie de seconde boucle de refroidissement relié fluidiquement à la pluralité de passages de seconde boucle de refroidissement, le collecteur de sortie de seconde boucle de refroidissement étant conçu pour combiner le second liquide de refroidissement de la pluralité de passages de seconde boucle de refroidissement,
dans lequel la pluralité de passages de première boucle de refroidissement (280) sont mélangés dans un agencement côte à côte en alternance avec la pluralité de passages de seconde boucle de refroidissement dans un seul plan de refroidissement, et
dans lequel le noyau de plaque froide à boucle redondante monolithique est une seule pièce comprenant une structure unitaire ; et **caractérisé en ce que** le collecteur d'entrée de première boucle de refroidissement et le collecteur d'entrée de seconde boucle de refroidissement sont organisés dans un agencement empilé l'un avec l'autre et le collecteur de sortie de première boucle de refroidissement et le collecteur de sortie de seconde boucle de refroidissement sont organisés dans un agencement empilé l'un avec l'autre ;
dans lequel le collecteur d'entrée de première boucle de refroidissement est gravitationnellement au-dessus du collecteur d'entrée de seconde boucle de refroidissement et le collecteur de sortie de seconde boucle de refroidissement est gravitationnellement au-dessus du collecteur de sortie de première boucle de refroidissement.
